(19) Europäisches Patentamt
European Patent Office
Office européen des brevets

(11) **EP 4 521 354 A1**

(12) **EUROPEAN PATENT APPLICATION**

(43) Date of publication:
**12.03.2025 Bulletin 2025/11**

(21) Application number: **23306472.4**

(22) Date of filing: **05.09.2023**

(51) International Patent Classification (IPC):
**G06T 17/10** (2006.01)  **G06T 11/00** (2006.01)
**G06T 19/20** (2011.01)

(52) Cooperative Patent Classification (CPC):
**G06T 19/20; G06T 17/10;** G06T 2200/24;
G06T 2219/2021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Dassault Systèmes**
**78140 Vélizy-Villacoublay (FR)**

(72) Inventors:
• **BELTRAND, Nicolas**
**78946 VELIZY VILLACOUBLAY CEDEX (FR)**
• **DOGANIS, Fivos**
**78946 VELIZY VILLACOUBLAY CEDEX (FR)**
• **BOUFARGUINE, Mourad**
**78946 VELIZY VILLACOUBLAY CEDEX (FR)**

(74) Representative: **Atout PI Laplace**
**Immeuble Up On**
**25 Boulevard Romain Rolland**
**CS 40072**
**75685 Paris Cedex 14 (FR)**

(54) **METHOD FOR MODIFYING A 3D MODEL BY USING A PARTIAL SKETCH IN AN AR/VR ENVIRONMENT**

(57) The invention relates to a computer-implemented method for designing a 3D model in an AR/VR environment, which comprises the steps of:

e) Providing a 3D model in a 3D scene, the 3D model comprising at least one extruded section which results from the extrusion of a planar section, said extruded section being defined by a set of parameters;

f) Receiving a 3D user sketch in the 3D scene;

g) At each iteration of a plurality of iterations:

- c1) Modifying at least one of said parameters, thereby obtaining a modified 3D model;

- c2) Performing a discretization of the modified 3D model, thereby obtaining a 3D point cloud;

- c3) Computing an energy which comprises a first term which penalizes an inconsistency between the modified 3D model (4) and the initial 3D model (1), and a second term which penalizes a mismatch between the 3D point cloud and the 3D user sketch (3);

said parameters being modified so as to minimize said energy;

h) outputting the modified 3D model (4).

FIG.1

**Description**

The invention relates to the field of computers programs and systems, and more specifically to the field of computer-implemented method for modifying a three-dimensional (3D) modeled object in a 3D scene of an AR/VR (Augmented Reality/Virtual Reality) environment by using a 3D user sketch. In particular, the invention belongs to the sketching field. The present invention could be used in any three-dimensional-based CAD software.

2D/3D Sketching and 3D modeling are two major steps of industrial design. Sketching is typically done first, as it allows designers to express their vision quickly and approximately. Design sketches are then converted into 3D models for downstream engineering and manufacturing, using CAD tools that offer high precision and editability.

Existing software propose the creation of 3D models from hand-drawn sketches. The user draws in 2D, which is natural for the user, instead of having to sculpt 3D shapes. New immersive (AR/VR) systems have demonstrated that directly sketching in 3D space is another very expressive and natural interaction paradigm for 3D model creation.

However, the design intention of the user is not entirely fulfilled, and it may be useful to edit the 3D model, so as to refine it.

In "Sketch2Mesh: Reconstructing and Editing 3D Shapes from Sketches" (Guillard et al., ICCV 2021), an encoder/decoder architecture, based on a deep learning model, is trained to regress surface meshes from synthetic sketches. The user draws an initial sketch to obtain its 3D reconstruction. Then, he can manipulate the object in 3D and draw one or more desired modifications, with a complete or a partial sketch. 3D surfaces are then optimized to match each constraint, by solving an optimization problem of minimizing a 2D Chamfer Distance, which is based on an energy minimization strategy.

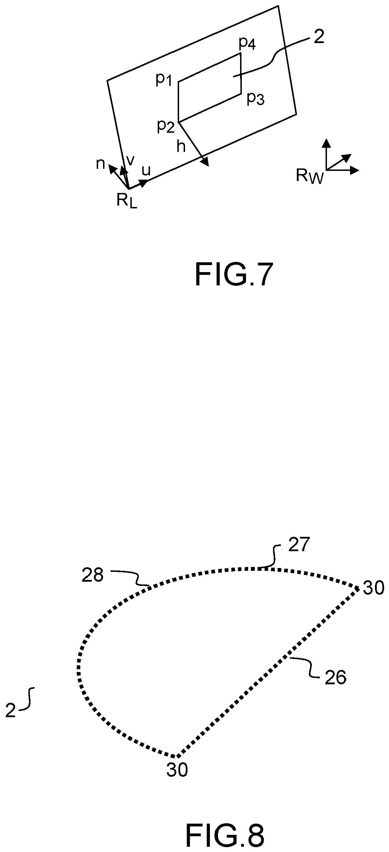

For example, in figure 8 of the article, the user draws a car as an input sketch, from a three-quarter view. A 3D model of a car is reconstructed from that view, using the same camera parameters and thus rendered in same image plane. Then, the user changes the viewpoint so as to have the car in a side view, from where he can shorten the length of the trunk and move forward the rear wheels.

Sketch2Mesh is only intended for 2D sketch; thus, it is not transposable to an AR/VR environment. Besides, in Sketch2Mesh, the user can only edit the external silhouette of the mesh and not sharp visible inner edges. Indeed, in Sketch2Mesh, the minimization of the 2D Chamfer Distance comprises finding the 3D mesh points that project to the contour of the foreground image, then minimizing the Chamfer distance between the contour and the sketch. Thus, the user cannot modify internal details of the 3D model, such as the windows, or the external rear glass (cf. example in figure 8 of the article).

Besides, editing a mesh has too many degrees of freedom (usually thousands of vertices to optimize). In addition of being computationally expensive, it may results in non-plausible mesh or with many defaults in the edited area. Thus, plausibilty constraints are added to the optimization algorithm in order to avoid those issues, which adds more processing to the optimization algorithm.

Therefore, there is a need for providing a computer-implemented method for designing a 3D model in an AR/VR environment, which enables an edition of the inner edges of a 3D model, and which does not edit directly the mesh.

An object of the present invention is a computer-implemented method for designing a 3D model in an AR/VR environment, which comprises the steps of:

a) Providing a 3D model in a 3D scene, the 3D model comprising at least one extruded section which results from the extrusion of a planar section, said extruded section being defined by a set of parameters;
b) Receiving a 3D user sketch in the 3D scene;
c) At each iteration of a plurality of iterations:

c1) Modifying at least one of said parameters, thereby obtaining a modified 3D model;
c2) Performing a discretization of the modified 3D model, thereby obtaining a 3D point cloud;
c3) Computing an energy which comprises a first term which penalizes an inconsistency between the modified 3D model and the initial 3D model, and a second term which penalizes a mismatch between the 3D point cloud and the 3D user sketch;
said parameters being modified so as to minimize said energy;

d) outputting the modified 3D model.

Additional features and advantages of the present invention will become apparent from the subsequent description, taken in conjunction with the accompanying drawings:

Figure 1 illustrates a flowchart of the invented method.
Figures 2 and 3 illustrate two examples of a 3D primitive inference from a user sketch.

Figures 4-6 illustrate several examples of edition of a 3D model by using the invented method.

Figure 7 illustrates the vertices and the extrusion vector of a 3D primitive.

Figures 8-10 illustrate different steps of discretization of the modified 3D model.

Figures 11-13 illustrate the computing of the custom Chamfer energy.

Figure 14 illustrates the computing of the symmetry energy.

Figure 15 illustrates the invented method from different viewpoints.

Figure 16 illustrates an example of providing an initial 3D model in an AR/VR environment.

Figure 17 illustrates an embodiment of the invention for the edition of revolve surfaces.

Figure 18 illustrates a computer for carrying out the invented method.

Figure 19 illustrates a block diagram of a computer system suitable for carrying out a method.

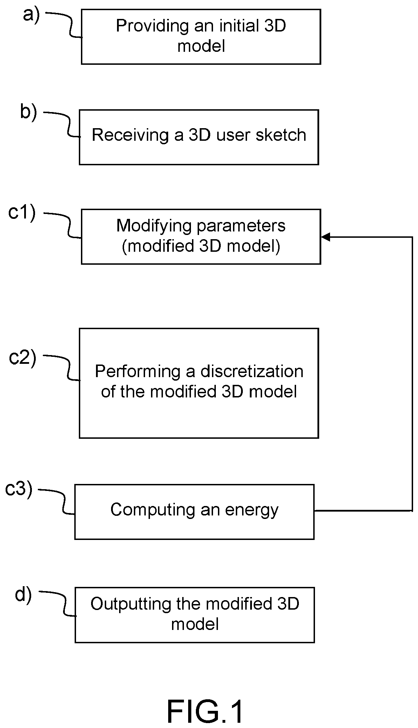

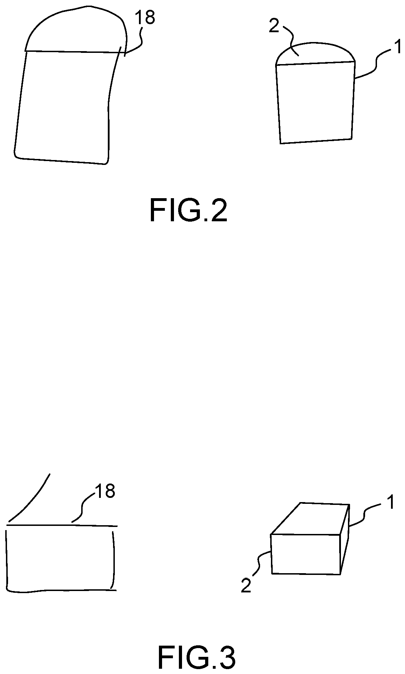

Referring to the flowchart of figure 1, the invented method comprises a first step a) of providing an initial 3D model 1 comprising at least one extruded section 2, in a 3D scene. Examples of the initial 3D model 1 are provided in figures 2 and 3.

Such an initial 3D model 1 may be inferred by using the Convolutional Neural Network (CNN) encoder which is disclosed in the patent application EP3958162A1. The disclosed encoder uses partial user sketches 18 and the learned patterns to encode the 2D sketch into data defining a 3D model.

The Convolutional Neural Network (CNN) encoder which is disclosed in the patent application EP3958162A1 infers a real time 3D primitive; thus the user receives a real-time feedback of the 3D primitive. Thus, the design process is not interrupted, and the user can continuously sketch while being guided by the proposed inference.

For example, in figure 2, the user sketches a rectangle, topped by a half-circle (left part of the figure). The encoder infers a half-cylinder as a 3D primitive. In figure 3, the user sketches a rectangle, and a stroke from an upper vertex of the rectangle. The encoder infers a parallelepiped as a 3D primitive.

To describe a 3D primitive, the following representation is used in patent application EP3958162A1:

- A list of 3D points $p_i$ of the planar section (typically the vertices of the planar section);
- A list of line type $l_i$ in {0, 1} describing whether two consecutive points of the section are connected with a segment or an arc;
- A 3D vector h representing the direction and length of extrusion.

It can be noted that it is not essential for the 3D model to be inferred by using the aforementioned encoder. The 3D model may simply be available in a CAD software, or it can be obtained from any other method such as a download from the Internet. The 3D model parameterization of such a 3D model may be easily and automatically converted to the aforementioned parameterization format (list of 3D points, list of line type, 3D vector) to represent a CAD model.

With the invented method, the parameter corresponding to the line type does not change (the connection between two vertices will always be of the same type, the invented method only impacts the position of the vertices and the extrusion vector).

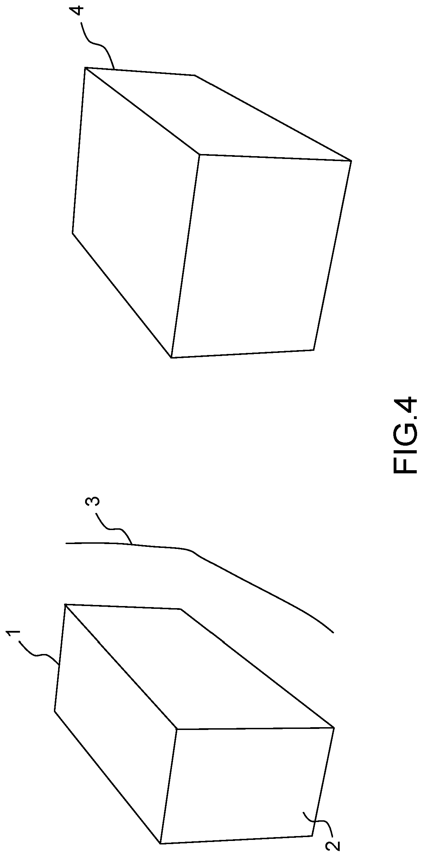

The method comprises a second step b) which consists in receiving a 3D user sketch 3 in the 3D scene. Exemplary user sketches 3 are illustrated on the left parts of figures 4-6.

The method can be implemented in any environment that allows 3D drawing in space, for example by means of a virtual reality headset and a wireless handheld controller of type "HTC Vive"™. Alternatively, the 3D user sketch may be provided by any 3D input device, such as a 3D AR pen, for example the one disclosed in "Solpen: An Accurate 6-DOF Positioning Tool for Vision-Guided Robotics" (Trung-Son Le et al.).

The initial 3D model 1 is rendered in 3D, by means of a 3D display device such as a virtual reality headset.

By using a wireless handheld controller, the user may press on one of the buttons while moving the wireless handheld controller, in order to input a user sketch in the 3D scene.

In the example of figure 4, the user sketches a stroke 3.

As a result, after several iterations (step c) of the method), the modified 3D model 4 is displayed (step d) of the method), as illustrated on the right part of figure 4. On figure 4, the modified parallelepiped is larger than the initial parallelepiped. The modified 3D model may be displayed continuously after each iteration, or at the end of all the iterations.

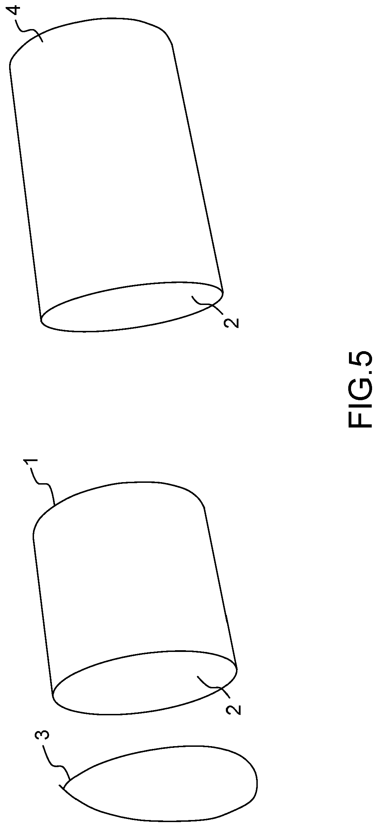

Another example is illustrated on figure 5. The initial 3D model 1 is a revolution cylinder, which is characterized by a basis and a height. The user sketch 3 is an elongated circle next to the basis of the cylinder. In reaction to the user sketch, after several iterations (step c) of the method), the modified 3D model 4 is displayed (step d) of the method), as illustrated on the right part of figure 5.

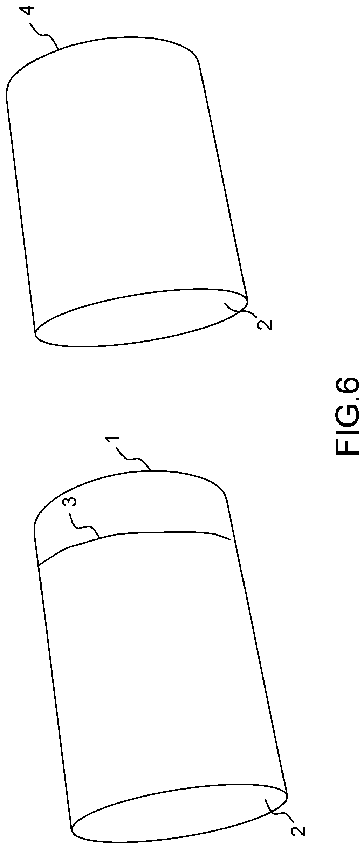

Another example is illustrated on figure 6. The initial 3D model 1 is a revolution cylinder. In reaction to a user sketch 3, the height of the cylinder is shortened, and fits on the user sketch.

It can be seen, on the examples of figures 4-6, that the modified 3D model 4 matches with the user sketch 3, and the consistency between the modified 3D model 4 and the initial 3D model 1 is maintained.

The idea on which the invention relies is computing and optimizing parameters which define the 3D model. In one embodiment of the present invention, the initial 3D model is defined by a linear extruded section, which can be expressed in the 3D scene by means of parameters, namely the position of 3D points $p_i$ of the section in the 3D scene and the extrusion vector h, expressed in the world coordinate space RW.

Let $\widehat{p_i}$ the points of the edited primitive (modified 3D model) and $\hat{n}$ the direction of extrusion of the edited primitive, expressed in the world coordinate space $R_w$.

Figure 7 illustrates an exemplary section of a parallelepiped. The section is made of 3D points $p_1, p_2, p_3, p_4$, which are the vertices of the section.

In the present application, and for sake of clarity and conciseness, line types (i.e. segment or arc) are not optimized, because they are discrete parameters: they can either be a straight segment or an arc. During the optimization process, a straight segment remains a straight segment, an arc remains an arc. However, the optimization of the line types could be implemented by using a curve parameterization, or continuous parameters for the line type (parameter in [0,1] with a linear transformation from segment to half circle arc).

A straightforward possibility would consist in directly optimizing the position of 3D points $p_i$ and the extrusion vector h, thus, having three degrees of freedom for each point and for the extrusion vector. However, it may lead to non-plausible results (the edited 3D points are not lying on a common plane), and it would make the optimization process harder to converge to the optimal solution due to a complex optimization space.

The invention advantageously defines all the points $\widehat{p_i}$ of the edited primitive in a common orthonormal local reference frame $R_L = (u,v, n)$, wherein u and v correspond to arbitrary vectors which define a plane of the section, and n is a normal to said plan (cf. figure 7).

The coplanarity of the points $\widehat{p_i}$ of the edited primitive can be expressed as follows:

$$\widehat{p_i} = p_i + o_{i,u}u + o_{i,v}v + o_n n$$

$o_{i,u}$ corresponds to a first offset of the point $p_i$ along vector u.
$o_{i,v}$ corresponds to a second offset of the point $p_i$ along vector v.
$o_n$ corresponds to a third offset of the point $p_i$ along vector n, said third offset $o_n$ being identical for all the points $p_i$ of the section.

All the points of the edited primitive share the same offset $o_n$ in the direction of the normal of the plane, in order to keep the points $\widehat{p_i}$ in a plane. Therefore, the coplanarity between the points is maintained, and the invented method contributes to the achievement of plausible results.

The extrusion vector $\hat{h}$ of the edited primitive (modified 3D model) is expressed as follows:

$$\hat{h} = h + (o_h - o_n)n$$

$o_h$ corresponds to a fourth offset of the scale of the extrusion vector. It can be noted that the extrusion vector h of the edited primitive is not computed with the formula $\hat{h} = h + o_h n$, because when $o_n$ is different from zero then the section plane is translated. Thus, it is necessary to counter balance the extrusion length in order not to also translate the extruded section. When the offset $o_h = 0$ then the extruded section is translated by $-o_n$, so in the 3D world space, the extruded section is at the same location. Therefore, with the above referenced definition of the extrusion vector $\hat{h}$ of the edited primitive, only the length of the extrusion vector is optimized, taking the third offset into account.

As a consequence, the modification of at least one of the parameters (sub-step c1, figure 1) comprises modifying at least one among said first offset, second offset, third offset or fourth offset. Thus, a modified 3D model 4, which comprises the modified parameter(s), is generated.

The number of parameters to optimize is equal to 1 + nbSides * 2 + 1, wherein nbSides corresponds to the number of vertices of the section of the initial 3D model. Each offset is initialized to zero for the first iteration step.

The second sub-step c2) comprises performing a discretization of the modified 3D model, thereby obtaining a 3D point cloud.

Thanks to the generation of the 3D point cloud 5, the 3D model, which is only defined by parameters, can be displayed in the 3D scene.

The generation of the 3D point cloud 5 is illustrated by figures 8-10. The circumference of the planar section 2 comprises rectilinear parts 26 and/or non-rectilinear parts 27. For example the planar section of a cube only comprises rectilinear parts, whereas the planar section of a half-cylinder comprises a rectilinear part 26 and a non-rectilinear part 27 (cf. figure 8). A non-rectilinear part 27 comprises at least one arc.

For the rectilinear parts 26, sub-step c2) comprises:

- an extrusion of each endpoint 30 of each rectilinear part 26 according to the extrusion vector, thereby forming a first set of extruded endpoints 31;
- a regular discretization of each segment 32 defined by an endpoint 30 and a corresponding extruded endpoint 31 of the first set of extruded endpoints;
- a regular discretization of each rectilinear parts 26;
- a regular discretization of each extruded segment 33, an extruded segment being defined by two adjacent extruded endpoints.

For the non rectilinear parts 27 (cf. figures 8-10), sub-step c2) comprises:

- a discretization of each arc into rectilinear parts 35 (i.e. polygonization of the arc), thereby obtaining a second set of endpoints 34. A few dozen of endpoints 34 are usually sufficient to represent an arc with segments (second set of segments 35).
- an extrusion of each endpoint 34 according to the extrusion vector, thereby forming a second set of extruded endpoints 36;
- a regular discretization of each segment 29 defined by an endpoint 34 of the second set of endpoints 34 and a corresponding extruded endpoint 36 of the second set of extruded endpoints 36;
- a regular discretization of each extruded segment 37, an extruded segment 37 being defined by two adjacent extruded endpoints 36.

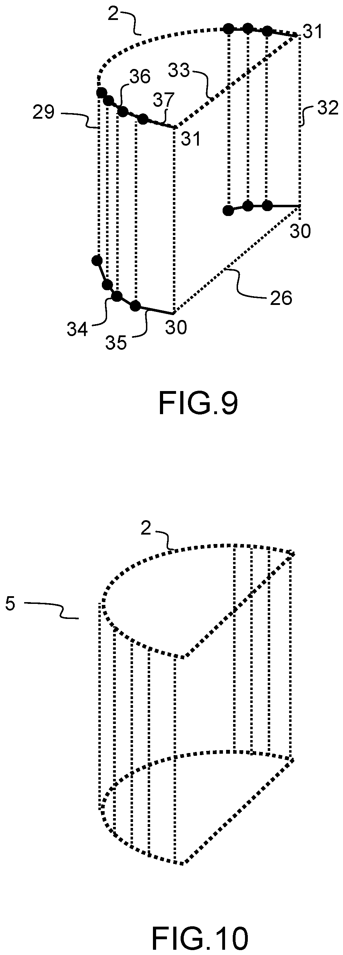

On figure 9, not all the extruded segments are represented, for the sake of clarity of the figure.

Then, the 3D point cloud 5 is obtained, as illustrated by figure 10.

As illustrated by figure 1, the invented method comprises, at each iteration, a step c3) which comprises computing an energy made of a first term which penalizes an inconsistency between the modified 3D model 4 and the initial 3D model 1, and a second term which penalizes a mismatch between the 3D point cloud 5 and the user sketch 3. After each iteration, the parameters are modified so as to minimize the energy.

The first term encourages the aforementioned offsets to be close to zero. Indeed, to keep consistency between the original primitive and the edited one, most of the offsets may be equal to zero (which means that there is no change from the original primitive, the 3D models are consistent one to the other). "Consistency" refers to the fact that the geometrical shape remains the same (for example a cube remains a cube, a cylinder remains a cylinder, a pyramid remains a pyramid), but the dimensions may change.

According to an embodiment of the invention, the first term, which is referred to as offset regularization energy, is computed as follows:

$$e_{\text{offsets}} = \frac{e_1}{l_h} + \frac{e_2}{l_{\text{side}}} + \frac{e_3}{l_h} + K\sqrt{e_1 * e_2 + e_1 * e_3 + e_2 * e_3 + \varepsilon}$$

wherein

$$e_1 = o_n^2 \qquad e_2 = \sum(o_{i,u}^2 + o_{i,v}^2) \qquad e_3 = (o_h - o_n)^2$$

$$l_h = \|h\|^2 \qquad l_{side} = \frac{1}{nbSides}\sum_{i=0}^{nbSides}\|p_{(i+1)\%nbSides} - p_i\|^2$$

nbSides corresponds to the number of edges of the section of the initial 3D model, %*nbSides* corresponds to a "modulo" numbering, $\varepsilon$ is determined to prevent a non-differentiability of the square root for the first iterations, $p_i$ corresponds to a position of the point.

$o_{i,u}$ corresponds to a first offset of the point $p_i$ along vector u.

$o_{i,v}$ corresponds to a second offset of the point $p_i$ along vector v.

$o_n$ corresponds to a third offset of the point $p_i$ along vector n, said third offset $o_n$ being identical for all the points $p_i$ of the

section.

$o_h$ corresponds to a fourth offset of the scale of the extrusion vector.

Minimizing the first term means looking for a solution that minimizes the offsets, being kept in mind that the optimal solution is usually the simplest one in term of offset changes. $\dfrac{e_1}{l_h}$ corresponds to relative section plane translation in the direction of its normal. $e_1$ is a squared value so as to get a positive value at each iteration, since the energy is to be minimized. $l_h$ corresponds to the length of the extrusion vector. $\dfrac{e_2}{l_{side}}$ corresponds to a relative modification of the points of the section within the plane. $l_{side}$ corresponds to the mean length of a segment, between two points $p_i$ of the section. For example, for a four-point section ($p_1$, $p_2$, $p_3$, $p_4$), $l_{side}$ is computed as follows:

$$l_{side} = \frac{1}{4}(\|p_2 - p_1\|^2 + \|p_3 - p_2\|^2 + \|p_4 - p_3\|^2 + \|p_1 - p_4\|^2$$

$\dfrac{e_3}{l_h}$ corresponds to a relative modification of the scale of the extrusion vector.

The first term $e_{offsets}$ is a sum of quadratic energies, and minimizing a sum of quadratic elements tends to split the errors into each different element. This is not the desired behavior because it usually leads to non-plausible results in terms of user intentionality.

Indeed, it is unlikely that the user edits the extrusion direction length and the section plane/section points using a single stroke. It is also unlikely that he edits the points of the section and the plane of the section at the same time. Because of the interactivity of the invented method, the 3D model is edited iteratively, after each user stroke, and one single stroke usually means a minor modification.

That is why the term $K\sqrt{e_1 * e_2 + e_1 * e_3 + e_2 * e_3 + \varepsilon}$ has been added; it highly penalizes the simultaneous modifications. Indeed, the term is equal to zero when at least two of the energies $e_1$, $e_2$ and $e_3$ are equal to zero.

In a preferred embodiment, $1 \leq K \leq 10^6$ and $\varepsilon \leq 10^{-6}$.

A too high K coefficient ($10^9$ for example, or even $10^6$) would make the optimization unstable (the term becomes too overwhelming compared to other energies, especially since floating values are handled: there are no values which are strictly equal to zero). Thus, it is acceptable to lower $K$ in order to accept minor errors of floats (two terms very slightly non-zero).

Consequently, $K = 10^3$ is a good trade-off.

Advantageously, $\varepsilon \leq 10^{-6}$, for example $\varepsilon \leq 10^{-8}$, in order to prevent non differentiability (a square root is not differentiable at zero for the first iterations).

The energy to be minimized comprises a second term, referred to as custom Chamfer energy, which penalizes a mismatch between the 3D point cloud 5 and the user sketch 3.

In what follows, the 3D points of the user sketch 3 are called the "target 3D points".

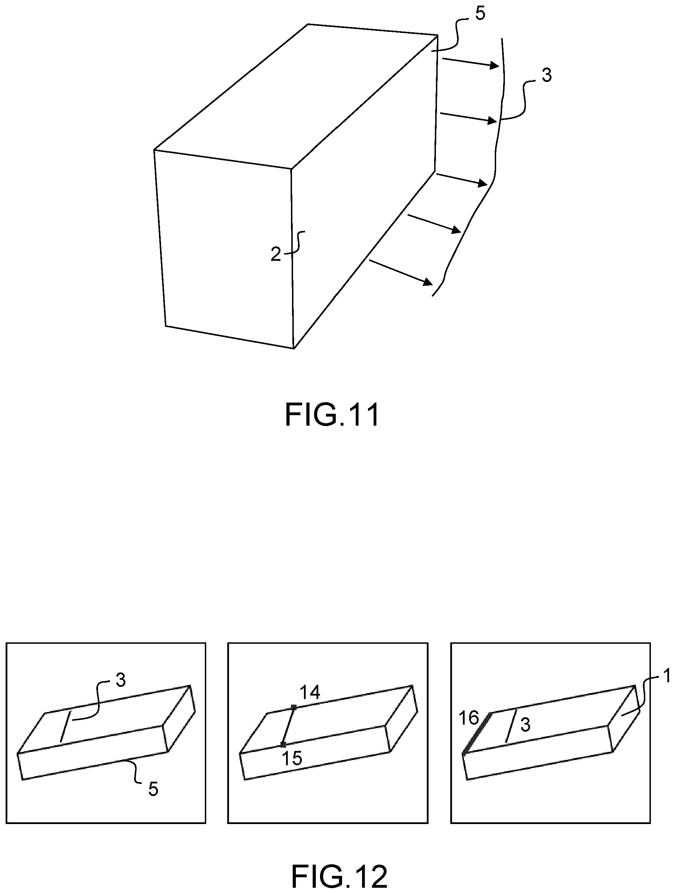

The idea is to iterate over each target 3D point 3 and minimize the distance between that point 3 and the closest 3D point from the rendered 3D points list 5. All target points should "attract" (i.e. reduce the distance) the closest point from the other list points, as illustrated by figure 11.

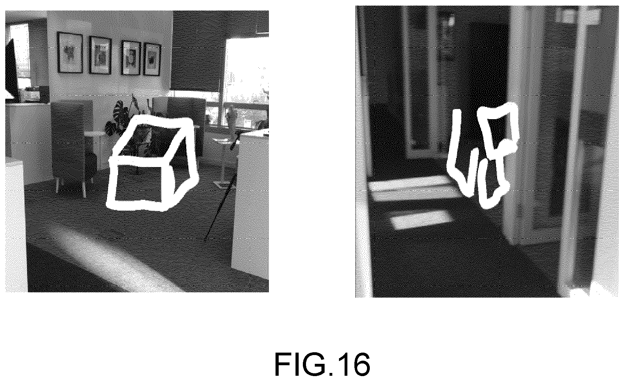

The notion of "close" points depends on a distance metric, which is usually the L2 norm in the prior art. However, in the present case, it has been pointed out that a L2 norm (or L2 distance) is not well suited in all situations to find the correct rendered point to attract, as illustrated by figure 16.

On the left part of figure 12, the 3D point cloud 5 is displayed along with the target 3D points 3 which should "attract" the 3D point cloud 5.

On the middle part of figure 12, the points of the 3D point cloud 5 which are closest to each target 3D point, using the L2 norm, are concentrated in the areas 14 and 15, which does not correspond to the user's intention.

Indeed, on the right part of figure 12, the segment 16 corresponds to the correct rendered points which should be "attracted" and which should match the user target stroke 3. Here there is no ambiguity about this user intention, because it would be a nonsense (and would not respect the idea of simplest solution stated before) to attract rendered points belonging to an orthogonal edge to the target stroke line.

Since the well-known L2 distance is not satisfying for computing the distance between the 3D point cloud and the target 3D points, the invented method advantageously comprises computing a distance which is particularly well adapted to the present case.

Indeed, the user strokes are seen as a set of lines which must attract close parallel contours. The computed distance incorporates more meaning into the input rather than a set of target 3D points which are all isolated and independent one to each other.

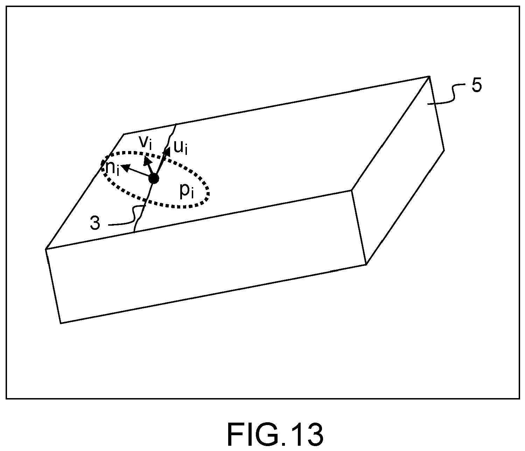

Figure 13 illustrates this embodiment. For each target 3D point $pix_i$, its 3D local stroke direction $u_i$ is approximated, using its target 3D points neighbors (two points of the user sketch 3 which pass by the point of the user sketch $pix_i$). $n_i$ and $v_i$ are two arbitrary vectors such that ($pix_i$ ; $u_i$, $n_i$, $v_i$ ) form a local 3D orthonormal system.

For each target point $pix_i$, a local 3D coordinate system ($pix_i$ ; $u_i$, $v_i$, $n_i$) is defined, with $n_i$ being orthogonal to $u_i$ and $v_i$.

Then, for each point $pix_i$ of the user sketch, the distance between the point $pix_i$ and each point of the 3D point cloud is computed. The distance which is used with the invented method is defined in such a way that the points of the 3D point cloud which are not part of the user sketch are closer than the points of the 3D point cloud which are also points of the user sketch (cf. points 14 and 15 on the middle part of figure 12).

$$d(p_i, p_k)^2 = \lambda * (p_k.u_i)^2 + (p_k.n_i)^2 + (p_k.v_i)^2$$

Therefore, the distance between points over the local direction of the stroke $u_i$ is increased when $\lambda > 1$. A target stroke line will attract a parallel primitive line.

Then the custom Chamfer energy $e_{chamfer}$ is computed as follows:

$$e_{chamfer} = \frac{1}{n} \sum_{p_i \in P_{target}} \min_{p_k \in P_{model}} d(p_i, p_k)^2$$

n corresponds to the number of points $pix_i$ of the user sketch 3.

$p_i$ corresponds to a point of the user sketch 3, and $L_{target}$ corresponding to the whole set of n points $p_i$ of the user sketch 3.

$p_k$ corresponds to a point of the 3D point cloud 5 and $L_{rendered}$ corresponds to the whole set of points $p_k$ of the 3D point cloud 5.

$\lambda$ is a scalar such that $\lambda > 1$. Indeed, with $\lambda > 1$, the points which are on the parallel to the user sketch are privileged for computing the custom Chamfer energy $e_{chamfer}$.

Advantageously, $2 \leq \lambda \leq 20$, and preferably $\lambda = 4$.

If $\lambda$ is too low (for example $1 \leq \lambda \leq 2$), the 3D local stroke direction $u_i$ will not be enough penalized. If $\lambda$ is too high, there may be instabilities in view of noise of the local normal $n_i$, which may slow down the real time computations.

Thanks to the normalization factor $\frac{1}{n}$, the custom Chamfer energy $e_{chamfer}$ does not depend on the size of the sketch. Besides, the energies are easily compared one to the others, since they all have the same order of magnitude, which is beneficial for the calculation of the gradient during the optimization.

It has been seen that, at each iteration of the invented method, an energy is computed. The energy comprises a first term (the offset regularization energy) which penalizes an inconsistency between the modified 3D model (4) and the initial 3D model (1), and a second term (the custom Chamfer energy) which penalizes a mismatch between the 3D point cloud 5 and the user sketch 3.

Optionally, the energy may also comprise a third term referred to as symmetry energy which penalizes a lack of symmetry of the modified 3D model, and which increase the plausibility of the modified 3D model.

Man-made objects are usually composed of symmetric and regular primitives. Indeed, it is more common to find cylindrical man-made objects than elliptic objects; rectangular shapes rather than arbitrary quadrilateral shapes.

The symmetry energy may be computed as follows:

$$e_{symmetry} = \min_{q \in Q} \left( \sum_{\widehat{p_i} \in \widehat{P}} \min_{\widehat{p'_{j,q}} \in \widehat{P'_q}} \left\| \widehat{p_i} - \widehat{p'_{j,q}} \right\|^2 + \sum_{\widehat{p'_{j,q}} \in \widehat{P'_q}} \min_{\widehat{p_i} \in \widehat{P}} \left\| \widehat{p_i} - \widehat{p'_{j,q}} \right\|^2 \right)$$

P is a set of points including the vertices of the section and the middle point between two consecutive vertices.

Q is a set of symmetry plane candidates which are all the planes containing two different points of P, and with normal orthogonal to the normal of the section.

$\hat{P}$ is the set of points containing all points ($p_i$) of the section of the initial 3D model and all the extruded points

$$\widehat{(p_i + \hat{h})}.$$

Given the set of points P and a plane q defining a symmetry, the set of symmetric points $\left(\widehat{P'_q}\right)$ is computed,

where $\widehat{P'_{i,q}}$ is the symmetric point of $\hat{P}_i$, using the symmetry plane q.

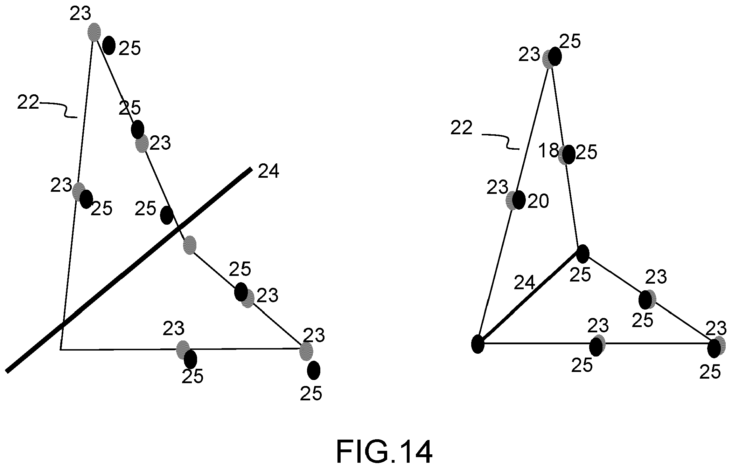

In the example of figure 14 (left part), the contours 22 of the section of the 3D model (here a quadrilateral) are to be optimized. The set of points P comprises the points 23. The line 24 represents the axis of the best plane of symmetry Q. The points 25 are the set of points $\hat{P}$. The right part of figure 14 illustrates the optimized 3D model by the symmetry energy. The set points of points P and $\hat{P}$ all merge, which means that the symmetry energy has been minimized, meaning a good symmetry with respect to the axis 24.

Finally, the energy to minimize is equal to the sum of at least the first and second terms, and potentially also the third and fourth terms:

$$e = k_{chamfer} * e_{chamfer} + k_{offsets} * e_{offsets} + k_{symmetry} * e_{symmetry}$$

$k_{chamfer}$, $k_{offsets}$ and $k_{symmetry}$ are weights which are determined so as to balance between regularization energies ($e_{offsets}$ and $e_{symmetry}$) and target energy ($e_{chamfer}$).

According to a particular embodiment, the following weights can be used:

$$k_{chamfer} = 10^3$$

$$k_{offsets} = 10^{-1}$$

$$k_{symmetry} = 10^{-1}$$

As mentioned above, each energy can be expressed using inputs (original CAD parameters of the extrusion and user sketch) and offsets. Thus, at each iteration, the energy and the offsets are determined, and it is possible to minimize the energy e by performing a gradient descent optimization compute $\frac{\partial e}{\partial o}$ where o is any offset.

The learning rate parameter of the descent (or descent rate) is adapted to match the scale of the primitive. For that, the following descent rate DR can be used

$$DR = \frac{1}{\alpha} * \frac{l_{side} + l_h}{2}$$

$l_{side}$ corresponds to the mean length of the section sides of the initial 3D model and $l_h$ corresponds to the length of the extrusion vector of the initial 3D model. $\alpha$ is a scalar.

In a preferred embodiment, $1 \leq \alpha \leq 10^6$, preferably $5 \leq \alpha \leq 10^4$, $10 \leq \alpha \leq 10^3$ $20 \leq \alpha \leq 100$, for example $\alpha = 50$.

It is preferred to have a low learning rate parameter during the optimization, so as not to vary the offsets too suddenly.

The invented method comprises a plurality of iterations of steps c1), c2) and c3). The parameters are modified after each iteration, so as to minimize said energy. Thus, the offsets are updated using the gradient descent step results. The number of iterations may be predetermined (for example 200, which has empirically proven to be very satisfying), or the iteration may stop if one or several predetermined criteria has been met.).

Finally, the edited CAD parameters are stored, so that the modified 3D model can be further used in a CAD software.

Because of the interactivity of the invented method, the 3D model is edited iteratively, after each user stroke, and one single stroke usually means a minor modification.

The method comprises a last step d) which comprises displaying the modified 3D model (cf. figure 1). The modified 3D model may be displayed continuously after each iteration, or at the end of all the iterations.

It can be noted that the shape modification is not limited to a single view. As the user draws, the user can move from one point of view of the 3D model to another.

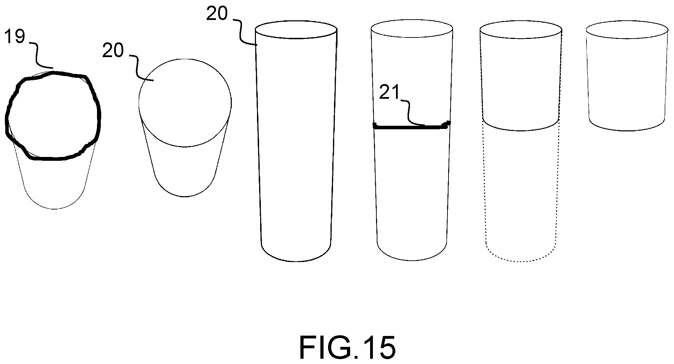

For example, in figure 15, the user draws a circle 19 according to a first view, thus a cylinder 20 is inferred. However, according to that first view, it would be difficult for the user to precisely modify the height of the cylinder. Then, the user changes the view; the user sketch can be provided according to that second view in order to refine the shape. The inferred shape is shrunk (cf. user sketch 21) to better fit to the strokes.

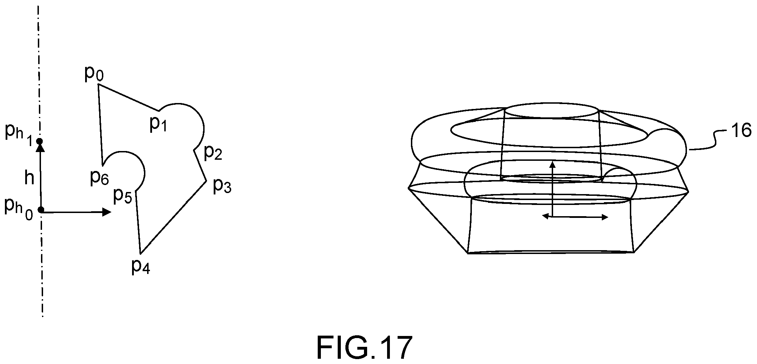

Figure 16 illustrates the difficulties of providing an initial 3D model in an AR/VR environment. Left part of figure 16 illustrates a "naive" drawing of a cube from a beginner AR user, who tends to draw in screen space / view space rather than in world space / world coordinates. When drawing a cube in AR, users draw the projection of the cube in mid-air (in 2.5 D), meaning mainly in 2D but with some depth information (intentional or not). Indeed, drawing the cube in 3D space, by moving to select every corner, is not intuitive nor it is accurate (cf. right part of figure 17).

The predicted 3D model (for example by using the Convolutional Neural Network encoder which is disclosed in the patent application EP3958162A1) could be optimized by taking into account all the strokes from all the views at once, or by optimizing a 3D model from every view, before performing a more global optimization.

The original 2.5 D strokes might not provide intentional depth information which can be used. In the algorithms of prior art, a threshold might be necessary if signal needs to be distinguished from noise, in order to provide depth tips. Contrary to that, the invented method does not need this depth information to work, but in some cases it could provide hints regarding the depth of the object being created.

The method has been disclosed in particular for a linear extrusion of a plane section, with an extrusion vector which is always orthogonal to the section plane.

However, the method can be extended to a section composed of multiple curves, with the line type list containing the different degrees of the curves. It is also possible to consider non-planar sections and extrusion vectors that are not orthogonal to the section plane.

In particular, the invented method is also particularly well adapted for a surface of revolution, which is considered as a curved extrusion (extrusion by revolution). The left part of figure 17 illustrates a planar section comprising a list of 3D points ($p_0$-$p_6$), and the axis of revolution is defined by a vector $h = p_{h_1} - p_{h_0}$, wherein $p_{h_0}$ and $p_{h_1}$ belong to the plane of the section on the axis of revolution.

It can be seen that connections $p_0$-$p_1$, $p_2$-$p_3$, $p_3$-$p_4$, $p_4$-$p_5$ and $p_6$-$p_0$ are segments and connections $p_1$-$p_2$ and $p_5$-$p_6$ are arcs. It is supposed that the connection types (segment or arc) do not change during the design process.

The right part of figure 17 illustrates the solid of revolution (initial 3D model) which is obtained by rotating the planar section $p_0$-$p_6$ around the axis of revolution defined by vector h.

The modified 3D model can be defined with regards to the initial 3D model by a modified set of points $\widehat{p_i}$ which corresponds to the modified planar section of the modified solid of revolution (modified 3D model):

$$\widehat{p_i} = p_i + o_{i,u} u + o_{i,v} v,$$

u,v correspond to vectors which define a plane of the planar section, $o_{i,u}$ and $o_{i,v}$ correspond to offsets to optimize.

Besides, the modified positions of the points $\widehat{p_{h_0}}$ and $\widehat{p_{h_1}}$ which correspond to the modified axis of revolution can be defined as follows:

$$\widehat{p_{h_0}} = p_{h_0} + o_{h_0,u} u + o_{h_0,v} v$$

$$\widehat{p_{h_1}} = p_{h_1} + o_{h_1,u} u + o_{h_1,v} v,$$

$o_{h_0,u}$, $o_{h_0,v}$, $o_{h_1,u}$, $o_{h_1,v}$ correspond to offsets to optimize.

At each iteration of the method, the modification at least one of the parameters of the 3D model comprises modifying one of the offsets $o_{i,u}$, $o_{i,v}$, $o_{h_0,u}$, $o_{h_0,v}$, $o_{h_1,u}$, $o_{h_1,v}$.

According to that embodiment, steps a), b), c1) and c2) are the same as for a linear extrusion, and will not be detailed for the sake of brevity.

In step c3), the first term (offset regularization energy), is computed as follows:

$$e = \frac{e_1}{l_h} + \frac{e_2}{l_{side}} + K\sqrt{e_1 * e_2 + \varepsilon}$$

$$e_1 = o^2{}_{h_0,u} + o^2{}_{h_0,v} + o^2{}_{h_1,u} + o^2{}_{h_1,v} \qquad e_2 = \sum(o^2_{i,u} + o^2_{i,v})$$

$$l_{side} = \frac{1}{nbPoints} * \sum_{i=0}^{nbPoints-1} \left\| p_{(i+1)\%nbPoints} - p_i \right\|^2$$

$$l_h = \left\| p_{h1} - p_{h0} \right\|^2$$

nbPoints corresponds to the number of points of the section of the initial 3D model, $K$ is a penalization weight which is determined to penalize simultaneous modifications in the user sketch 3, $\varepsilon$ is determined to prevent a non-differentiability of the square root for the first iterations.

The values of $K$ and $\varepsilon$ are determined similarly as for the linear extrusion.

Besides, in step c3), the second term (custom Chamfer energy) is identical to the second term for a linear extrusion. The third term (symmetry energy) is not relevant in case of a surface of revolution.

The inventive method can be performed by a suitably-programmed general-purpose computer or computer system, possibly including a computer network, storing a suitable program in non-volatile form on a computer-readable medium such as a hard disk, a solid state disk or a CD-ROM and executing said program using its microprocessor(s) and memory.

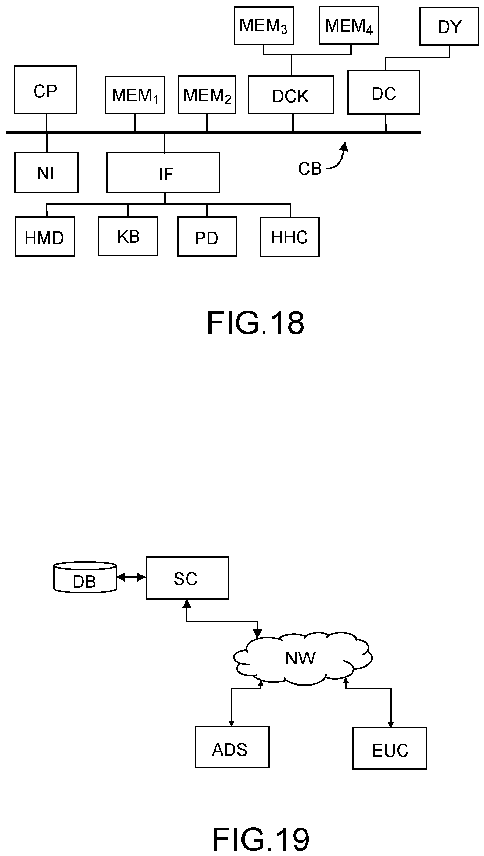

A computer - more precisely a computer aided design station - suitable for carrying out a method according to an exemplary embodiment of the present invention is described with reference to figure 18. In figure 18, the computer includes a Central Processing Unit CP which performs the processes described above. The process can be stored as an executable program, i.e. a set of computer-readable instructions in memory, such as RAM MEM1 or ROM MEM2, or on hard disk drive (HDD) MEM3, DVD/CD drive MEM4, or can be stored remotely. 3D models database in a form suitable to be processed by the executable program according to the inventive method - may also be stored on one or more of memory devices MEM1 to MEM4, or remotely.

The claimed invention is not limited by the form of the computer-readable media on which the computer-readable instructions of the inventive process are stored. For example, the instructions and databases can be stored on CDs, DVDs, in FLASH memory, RAM, ROM, PROM, EPROM, EEPROM, hard disk or any other information processing device with which the computer aided design station communicates, such as a server or computer. The program and the database can be stored on a same memory device or on different memory devices.

Further, a computer program suitable for carrying out the inventive method can be provided as a utility application, background daemon, or component of an operating system, or combination thereof, executing in conjunction with CPU PR and an operating system such as Microsoft VISTA, Microsoft Windows 7, UNIX, Solaris, LINUX, Apple MAC-OS and other systems known to those skilled in the art.

The Central Processing Unit CP can be a Xenon processor from Intel of America or an Opteron processor from AMD of America, or can be other processor types, such as a Freescale ColdFire, IMX, or ARM processor from Freescale Corporation of America. Alternatively, the Central Processing Unit CP can be a processor such as a Core2 Duo from Intel Corporation of America, or can be implemented on an FPGA, ASIC, PLD or using discrete logic circuits, as one of ordinary skill in the art would recognize. Further, the CPU can be implemented as multiple processors cooperatively working to perform the computer-readable instructions of the inventive processes described above.

The computer aided design station in figure 18 also includes a network interface NI, such as an Intel Ethernet PRO network interface card from Intel Corporation of America, for interfacing with a network, such as a local area network (LAN), wide area network (WAN), the Internet and the like. The computer aided design station further includes a display controller DC, such as a NVIDIA GeForce GTX graphics adaptor from NVIDIA Corporation of America for interfacing with display DY, such as a Hewlett Packard HPL2445w LCD monitor or a virtual reality headset. A general purpose I/O interface IF interfaces with a keyboard KB and pointing device PD, such as a roller ball, mouse, touchpad, control devices of a virtual reality system and the like. The display, the keyboard and the pointing device, together with the display controller and the I/O interfaces, form a graphical user interface.

The computer system further includes a head mounted display device HMD having a head tracking device. The general purpose I/O interface IF interface has at least one hand held controller HHC which is equipped with a hand tracking device. The display, the keyboard and the pointing device, together with the display controller and the I/O interfaces, form a graphical user interface, used by the user to provide user sketches and by the computer for displaying the 3D objects.

Disk controller DKC connects HDD MEM3 and DVD/CD MEM4 with communication bus CB, which can be an ISA, EISA, VESA, PCI, or similar, for interconnecting all of the components of the computer aided design station.

The computer also comprises a memory having recorded thereon the data structure which comprises the Convolutional Neural Network (CNN) encoder which infers the 3D primitive based on the 3D sketch and based on the learned patterns. The skilled person may refer to patent application EP3958162A1 for an exemplary description of the encoder.

The modified 3D model may be stored on CDs, DVDs, in FLASH memory, RAM, ROM, PROM, EPROM, EEPROM, hard disk or any other server or computer, for a further use in a computer aided design. A physical (mechanical) object, or a part of said object, may be manufactured based on a file containing the modified 3D model. The file may be converted in a readable format for the manufacturing process. Thus, the invention also relates to a method of manufacturing a mechanical part, which comprises the steps of:

- Designing a mechanical part by means of the aforementioned design method;
- Physically manufacturing the mechanical part.

A description of the general features and functionality of the display, keyboard, pointing device, as well as the display controller, disk controller, network interface and I/O interface is omitted herein for brevity as these features are known.

Figure 19 is a block diagram of a computer system suitable for carrying out a method according to a different exemplary embodiment of the present invention.

In figure 19, the server SC is connected to an administrator system ADS and end user computer EUC via a network NW.

As can be appreciated, the network NW can be a public network, such as the Internet, or a private network such as an LAN or WAN network, or any combination thereof and can also include PSTN or ISDN sub-networks. The network NW can also be wired, such as an Ethernet network, or can be wireless such as a cellular network including EDGE, 3G and 4G wireless cellular systems. The wireless network can also be Wi-Fi, Bluetooth, or any other wireless form of communication that is known. Thus, the network NW is merely exemplary and in no way limits the scope of the present advancements.

The client program stored in a memory device of the end user computer and executed by a CPU of the latter accesses the 3D model databases on the server via the network NW.

Although only one administrator system ADS and one end user system EUX are shown, the system can support any number of administrator systems and/or end user systems without limitation.

Any processes, descriptions or blocks in flowcharts described herein should be understood as representing modules, segments, or portions of code which include one or more executable instructions for implementing specific logical functions or steps in the process, and alternate implementations are included within the scope of the exemplary embodiment of the present invention.

**Claims**

1. A computer-implemented method for designing a 3D model in an AR/VR environment, which comprises the steps of:

   a) Providing a 3D model (1) in a 3D scene, the 3D model (1) comprising at least one extruded section which results from the extrusion of a planar section (2), said extruded section being defined by a set of parameters;
   b) Receiving a 3D user sketch (3) in the 3D scene;
   c) At each iteration of a plurality of iterations:

   - c1) Modifying at least one of said parameters, thereby obtaining a modified 3D model (4);
   - c2) Performing a discretization of the modified 3D model (4), thereby obtaining a 3D point cloud (5);
   - c3) Computing an energy which comprises a first term which penalizes an inconsistency between the modified 3D model (4) and the initial 3D model (1), and a second term which penalizes a mismatch between the 3D point cloud and the 3D user sketch (3);
   said parameters being modified so as to minimize said energy;

   d) outputting the modified 3D model (4).

2. The method according to claim 1, wherein the planar section is extruded linearly according to an extrusion vector.

3. The method according to claim 2, wherein the planar section comprises a first set of rectilinear parts (26), and sub-step c2) comprises:

   - an extrusion of each endpoint (30) of each rectilinear part (26) according to the extrusion vector, thereby forming a first set of extruded endpoints (31);
   - a regular discretization of each segment (32) defined by an endpoint (30) of a rectilinear part and a corresponding extruded endpoint (31) of the first set of extruded endpoints (31);
   - a regular discretization of each rectilinear part (26);
   - a regular discretization of each extruded segment (33), an extruded segment (33) being defined by two adjacent extruded endpoints (31) of the first set of extruded endpoints (31).

4. The method according to any of claims 2 or 3, wherein the planar section comprises non-rectilinear parts (27), and sub-step c2) comprises:

   - a discretization of each non-rectilinear part into a second set of rectilinear parts (35), thereby obtaining a second set of endpoints (34);
   - an extrusion of each endpoint (34) according to the extrusion vector, thereby forming a second set of extruded endpoints (36);
   - a regular discretization of each segment (29) defined by an endpoint (34) of the second set of endpoints (34) and a corresponding extruded endpoint (36) of the second set of extruded endpoints;
   - a regular discretization of each extruded segment (37), an extruded segment (37) being defined by two adjacent extruded endpoints (36) of the second set of endpoints (34).

5. The method according to any of claims 2 to 4, wherein the set of parameters comprises the position of 3D points ($p_i$) of the section in the 3D scene and the extrusion vector (h), the modified 3D model (4) is defined with regards to the initial 3D model (1) by a modified set of points $\widehat{p_i}$ and by a modified extrusion vector $\hat{h}$ expressed as follows:

$$\widehat{p_i} = p_i + o_{i,u}u + o_{i,v}v + o_n n$$

$$\hat{h} = h + (o_h - o_n)n,$$

   wherein $p_i$ correspond to the set of points of the section of the initial 3D model (1), and h corresponds to the extrusion vector of the initial 3D model (1) expressed in a coordinate space $R_w$ of the 3D scene;
   u, v correspond to vectors which define a plane of the section, and n is a normal to said vectors;
   wherein:

   - $o_{i,u}$ corresponds to a first offset of the point $p_i$ along vector u,
   - $o_{i,v}$ corresponds to a second offset of the point $p_i$ along vector v,
   - $o_n$ corresponds to a third offset of the point $p_i$ along vector n, said third offset $o_n$ being identical for all the points $p_i$ of the section;
   - $o_h$ corresponds to a fourth offset of the scale of the extrusion vector;

   wherein modifying at least one of said parameters comprises modifying at least one among said first offset, second offset, third offset or fourth offset.

6. The method according to claim 5, wherein the first term, referred to as offset regularization energy, is computed as follows:

$$e_{\text{offsets}} = \frac{e_1}{l_h} + \frac{e_2}{l_{\text{side}}} + \frac{e_3}{l_h} + K\sqrt{e_1 * e_2 + e_1 * e_3 + e_2 * e_3 + \varepsilon}$$

   wherein

$$e_1 = o_n^2 \qquad e_2 = \Sigma(o_{i,u}^2 + o_{i,v}^2) \qquad e_3 = (o_h - o_n)^2$$

Wherein nbSides corresponds to the number of edges of the section of the initial 3D model, $K$ is a penalization weight which is determined to penalize simultaneous modifications in the user sketch (3), $\varepsilon$ is determined to prevent a non-differentiability of the square root for the first iterations.

7. The method according to claim 1, wherein, the initial 3D model (1) describing a 3D surface of revolution (16) which defines an extrusion by revolution, said 3D surface of revolution (16) being defined by the set of parameters comprising a list of 3D points $(p_i)$ of the planar section to revolve, and by an axis of revolution, expressed as follows:

$$h = p_{h_1} - p_{h_0}$$

Wherein $p_{h_0}$ and $p_{h_1}$ belong to the plane of the section on the axis of revolution,

Wherein the modified 3D model is defined with regards to the initial 3D model by a modified set of points $\widehat{p_i}$ of the planar section and by a modified vector of axis of revolution $\hat{h}$,

Wherein $\widehat{p_i} = p_i + o_{i,u} u + o_{i,v} v$ and $\hat{h} = \widehat{p_{h_1}} - \widehat{p_{h_0}}$

u, v corresponding to vectors which define a plane of the planar section,
$o_{i,u}$ and $o_{i,v}$ corresponding respectively to a fifth and sixth offsets to optimize;

And $\widehat{p_{h_0}} = p_{h_0} + o_{h_0,u} u + o_{h_0,v} v$ and $\widehat{p_{h_1}} = p_{h_1} + o_{h_1,u} u + o_{h_1,v} v$,

$o_{h_0,u}$ , $o_{h_0,v}$, $o_{h_1,u}$ , $o_{h_1,v}$ corresponding to offsets to optimize
wherein modifying at least one of said parameters comprises modifying at least one among said offsets.

8. The method according to claim 7, wherein the first term, referred to as offset regularization energy, is computed as follows:

$$e = \frac{e_1}{l_h} + \frac{e_2}{l_{side}} + K\sqrt{e_1 * e_2 + \varepsilon}$$

Where:

$$e_1 = o^2{}_{h_0,u} + o^2{}_{h_0,v} + o^2{}_{h_1,u} + o^2{}_{h_1,v} \qquad e_2 = \Sigma(o_{i,u}^2 + o_{i,v}^2)$$

$$l_{side} = \frac{1}{nbPoints} * \sum_{i=0}^{nbPoints-1} \left\| p_{(i+1)\%nbPoints} - p_i \right\|^2$$

$$l_h = \| p_{h1} - p_{h0} \|^2$$

Wherein nbPoints corresponds to the number of points of the section of the initial 3D model, $K$ is a penalization weight which is determined to penalize simultaneous modifications in the user sketch (3), $\varepsilon$ is determined to prevent a non-differentiability of the square root for the first iterations.

9. The method according to any of the preceding claims, wherein the second term, referred to as custom Chamfer energy, is computed as follows

$$e_{\text{chamfer}} = \frac{1}{n} \sum_{p_i \in P_{target}} \min_{p_k \in P_{model}} d(p_i, p_k)^2$$

Wherein $P_{target}$ is a regular sampling of the 3D user sketch, referred to as target point cloud, $P_{model}$ is the 3D point cloud, n is a scaling constant

$$d(p_i, p_k)^2 = \lambda * (p_k. u_i)^2 + (p_k. n_i)^2 + (p_k. v_i)^2$$

For each point $p_i$ of the target point cloud, $u_i$ corresponds to a local stroke direction which extends through two points of the point cloud which pass by the point $p_i$, $n_i$ and $v_i$ are two arbitrary vectors such $(p_i; u_i, n_i, v_i)$ form a local coordinate system; wherein $\lambda$ is a scalar such that $\lambda > 1$.

10. The method according to any of claims 5 to 9, wherein the energy comprises a third term referred to as symmetry energy which is computed as follows:

$$e_{symmetry} = \min_{q \in Q} \left( \sum_{\widehat{p_i} \in \hat{P}} \min_{p'_{j,q} \in \widehat{P'_q}} \left\| \widehat{p_i} - \widehat{p'_{j,q}} \right\|^2 + \sum_{p'_{j,q} \in \widehat{P'_q}} \min_{\widehat{p_i} \in \hat{P}} \left\| \widehat{p_i} - \widehat{p'_{j,q}} \right\|^2 \right)$$

Wherein P is a set of points including the vertices of the section and the middle point between two consecutive vertices;

Q is a set of symmetry plane candidates which are all the planes containing two different points of P, and with normal orthogonal to the normal of the section;

P is the set of points containing all points ($p_i$) of the section of the initial 3D model and all the extruded points $\widehat{(p_i + \hat{h})}$;

Wherein, given the set of points P and a plane q defining a symmetry, the set of symmetric points ($\widehat{P'_q}$) is computed, where $\widehat{P'_{i,q}}$ is the symmetric point of $\hat{P}_i$, using the symmetry plane q.

11. The method according to any of claims 2 to 6 or 9 or 10, wherein the energy is minimized by performing a gradient descent optimization, with the following descent rate DR:

$$DR = \frac{1}{\alpha} * \frac{l_{side} + l_h}{2}$$

Wherein $l_{side}$ corresponds to the mean length of the section sides of the initial 3D model and $l_h$ corresponds to the length of the extrusion vector of the initial 3D model, $\alpha$ is a scalar.

12. A computer program product comprising computer-executable instructions to cause a computer system to carry out a method according to any of the preceding claims.

13. A computer-readable data-storage medium (MEM1, MEM2, MEM3, MEM4) containing computer-executable instructions to cause a computer system to carry out a method according to any of claims 1 to 11.

14. A computer system comprising a processor (CP) coupled to a memory (MEM1, MEM2, MEM3, MEM4), the memory storing computer-executable instructions to cause the computer system to carry out a method according to any of claims 1 to 11.

a) — Providing an initial 3D model

b) — Receiving a 3D user sketch

c1) — Modifying parameters (modified 3D model)

c2) — Performing a discretization of the modified 3D model

c3) — Computing an energy

d) — Outputting the modified 3D model

# FIG.1

FIG.2

FIG.3

FIG.4

FIG.5

FIG.6

FIG.7

FIG.8

FIG.9

FIG.10

FIG.11

FIG.12

FIG.13

FIG.14

EP 4 521 354 A1

FIG.15

FIG.16

FIG.17

MEM₃ MEM₄ DY

CP MEM₁ MEM₂ DCK DC

CB

NI IF

HMD KB PD HHC

## FIG.18

DB ↔ SC

NW

ADS EUC

## FIG.19

Europäisches
Patentamt

European
Patent Office

Office européen
des brevets

# EUROPEAN SEARCH REPORT

**Application Number**

EP 23 30 6472

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | GUILLARD BENOIT ET AL: "Sketch2Mesh: Reconstructing and Editing 3D Shapes from Sketches", 2021 IEEE/CVF INTERNATIONAL CONFERENCE ON COMPUTER VISION (ICCV), IEEE, 10 October 2021 (2021-10-10), pages 13003-13012, XP034093713, DOI: 10.1109/ICCV48922.2021.01278 [retrieved on 2022-02-10] * abstract * | 1-14 | INV. G06T17/10 G06T11/00 G06T19/20 |
| A | BRUNO F. ET AL: "3D input devices integration in CAD environment", , 1 January 2006 (2006-01-01), pages 1-7, XP093135914, Retrieved from the Internet: URL:https://diglib.eg.org/bitstream/handle/10.2312/LocalChapterEvents.ItalChap.ItalianChapConf2006.189-195/189-195.pdf?sequence=1&isAllowed=y> * abstract * | 1-14 | |
| A | GAO CHENJIAN ET AL: "SketchSampler: Sketch-Based 3D Reconstruction via View-Dependent Depth Sampling", 23 October 2022 (2022-10-23), SPRINGER INTERNATIONAL PUBLISHING, PAGE(S) 464 - 479, XP047637783, * abstract * * section 3; page 4 - page 8 * | 1-14 | |

**TECHNICAL FIELDS SEARCHED (IPC)**

G06T

-/--

The present search report has been drawn up for all claims

| Place of search | Date of completion of the search | Examiner |
|---|---|---|
| The Hague | 2 March 2024 | Martos Riaño, Demian |

## EUROPEAN SEARCH REPORT

Application Number

**EP 23 30 6472**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KANG YUNA ET AL: "Editing 3D models on smart devices", COMPUTER-AIDED DESIGN, ELSEVIER PUBLISHERS BV., BARKING, GB, vol. 59, 31 August 2013 (2013-08-31), pages 229-238, XP029108599, ISSN: 0010-4485, DOI: 10.1016/J.CAD.2013.08.001 * abstract * | 1-14 | |

TECHNICAL FIELDS
SEARCHED      (IPC)

The present search report has been drawn up for all claims

| Place of search | Date of completion of the search | Examiner |
|---|---|---|
| The Hague | 2 March 2024 | Martos Riaño, Demian |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3958162 A1

### Non-patent literature cited in the description

- **GUILLARD et al.** Sketch2Mesh: Reconstructing and Editing 3D Shapes from Sketches. *ICCV*, 2021

- **TRUNG-SON LE**. *Solpen: An Accurate 6-DOF Positioning Tool for Vision-Guided Robotics*